# EUROPÄISCHE PATENTSCHRIFT

(11) **EP 1 150 509 B1**
(45) Veröffentlichungstag und Bekanntmachung des Hinweises auf die Patenterteilung: **29.09.2004**
(21) Anmeldenummer: 01105122.4
(22) Anmeldetag: 02.03.2001
(51) Int. Cl.: H04N 7/18

(54) **Videoüberwachungssystem**
Video surveillance system
Système de surveillance vidéo

(30) Priorität: 29.03.2000 EP 00106763
(43) Veröffentlichungstag der Anmeldung: 31.10.2001
(73) Patentinhaber: Videte IT AG, 24118 Kiel (DE)
(72) Erfinder: Freiwald, Uwe, 24145 Kiel (DE)
(74) Vertreter: Seemann, Ralph, Dr. Dipl.-Phys.

(56) Entgegenhaltungen:
- EP-A- 0 715 459
- GB-A- 2 326 049
- PATENT ABSTRACTS OF JAPAN vol. 2000, no. 01, 31. Januar 2000 (2000-01-31) & JP 11 275560 A (FUJITSU LTD), 8. Oktober 1999 (1999-10-08)
- PATENT ABSTRACTS OF JAPAN vol. 1997, no. 03, 31. März 1997 (1997-03-31) & JP 08 289284 A (CANON INC), 1. November 1996 (1996-11-01)
- PATENT ABSTRACTS OF JAPAN vol. 014, no. 213 (E-0923), 7. Mai 1990 (1990-05-07) & JP 02 048872 A (MITSUBISHI ELECTRIC CORP), 19. Februar 1990 (1990-02-19)
- PATENT ABSTRACTS OF JAPAN vol. 1999, no. 12, 29. Oktober 1999 (1999-10-29) & JP 11 177969 A (FUJITSU LTD), 2. Juli 1999 (1999-07-02)

## Beschreibung

Die Erfindung betrifft ein Videoüberwachungssystem und ein Verfahren zur Bearbeitung, Verwaltung und/oder Speicherung von Folgen von Videobildern wenigstens einer Videokamera.

Derartige Systeme und Verfahren sind aus den Dokumenten GB-A-2 326 049, EP-A-0 715 459, JP 11 275560, JP 08 289284 A, JP 02 048872 A und JP 11 177969 A bekannt.

Im Videoüberwachungsbereich arbeiten heutzutage viele analoge Systeme, die sich aus einem analogen Multiplexer und einem Langzeitrekorder zusammensetzen. Der Multiplexer schaltet hierbei kontinuierlich alle angeschlossenen Kameras durch und das gemultiplexte Signal wird auf dem Langzeitrekorder aufgezeichnet. Nach einem sicherheitstechnisch relevanten Ereignis wird das Band des Langzeitrekorders wiedergegeben und manuell begutachtet. Während dieser Zeit ist keine Aufnahme mit dem gleichen System mehr möglich. Die Begutachtung ist sehr langwierig, da auch unwichtige Bilder aufgenommen wurden.

Um eine schnellere Begutachtung von sicherheitstechnisch relevanten Bildern zu erzielen, sind digitale Videoüberwachungssysteme eingeführt worden. Diese arbeiten teilweise nach einem Duplex-Verfahren. Hierbei können gleichzeitig Livebilder angezeigt werden und diese auch aufgezeichnet werden. Als Alternative hierzu können Bilder, die gespeichert wurden, wiedergegeben werden und gleichzeitig eine Aufzeichnung von Livebildern stattfinden. Bei diesen Systemen wird die Aufnahme bei der Begutachtung von Bildern sicherheitstechnisch relevanter Art nicht unterbrochen.

Derartige digitale Videoüberwachungssysteme zeichnen kontinuierlich Bilder auf oder aber erst nach Auslösen beispielsweise eines externen Bewegungsmelders oder einer internen Bewegungserkennung. Somit werden entweder zu viele Bilder aufgezeichnet oder die falschen Bilder, da diese erst nach Auslösen nach einer Bewegungserkennung mit der Aufzeichnung anfangen.

Somit hat die vorliegende Erfindung zur Aufgabe, ein Videoüberwachungssystem und ein Verfahren zur Bearbeitung, Verwaltung und/oder Speicherung von Folgen von Videobildern anzugeben, mit dem bei möglichst geringer Anzahl der gespeicherten Bilder sämtliche sicherheitstechnisch relevanten Bilder aufgezeichnet werden, wobei eine dauernde Anzeige von Livebildern auf eine Anzeigeeinrichtung möglich sein soll und insbesondere auch eine gleichzeitige Wiedergabe von gespeicherten Bildern, die in der Vergangenheit liegen.

Gelöst wird diese Aufgabe durch ein Videoüberwachungssystem gemäß Anspruch 1.

Durch diese Lösung können gleichzeitig aktuelle Bilddaten und gespeicherte Bilddaten auf der Anzeigeeinrichtung dargestellt werden, während zudem aktuelle Bilddaten in der Speichereinheit gespeichert werden können. Im Rahmen dieser Erfindung umfaßt der Begriff Bilddaten insbesondere den Begriff Videobild, Fernsehbild und allgemein Bild.

Dabei sind in der Bildeinheit Differenzbilder von je zwei aufeinanderfolgenden Bildern der Folge von Bilddaten je einer Videokamera oder von einem Bild der Folge von Videobildern zu einem Referenzbild erzeugbar. Durch diese Maßnahme ist es möglich, automatisch nur sicherheitstechnisch relevante Bilder zu betrachten bzw. zu speichern. Die hierdurch mögliche interne Bewegungserkennung reduziert so die Bild- und Datenmenge auf ein notwendiges Minimum. Es ist möglich, die entsprechenden Bilder in hervorragender Qualität ohne Rücksicht auf den Platzbedarf aufzunehmen, da nur wenige relevante Bilder aufgenommen werden. Hierbei wird die interne Speicherkapazität effektiv genutzt. Insbesondere ist es mit der Erfindung möglich, neben der Aufnahme parallel Bilder live darzustellen und lokal wiederzugeben oder live auf andere Anzeigeeinrichtungen oder Systeme zur Weiterbearbeitung der Bilder zu übertragen und entsprechend auch die gespeicherten Bilder übertragen wiederzugeben. Live bedeutet im Rahmen dieser Erfindung eine im Rahmen geringe Verzögerung von beispielsweise 0,5 Sekunden

Insbesondere ist es möglich, das Anzeigen, das Wiedergeben und das Aufnehmen in einem Zeitabschnitt im wesentlichen gleichzeitig durchzuführen. Insbesondere vorzugsweise werden digitale Videobilder aufgenommen und verarbeitet.

Die Differenzbilder werden bevorzugt zur Bewegungserkennung verwendet. Hierbei werden bevorzugterweise zwei aufeinanderfolgende Bilder bzw. ein Bild und ein Referenzbild in Bereiche aufgeteilt und die Abstände der jeweiligen Pixel in diesen Bereichen zueinander aufsummiert und gemittelt. Bei Änderungen der gemittelten jeweiligen Farbabstände bzw. bei Änderung der Intensität über einen insbesondere vorgebbaren Wert, wird dieses als eine Bewegung erkannt.

Vorzugsweise ist eine Zwischenspeichereinheit vorgesehen, die für jede Videokamera einen ersten Zwischenspeicher und einen zweiten Zwischenspeicher umfaßt, wobei die Bilddaten eines Videobildes sowohl in dem ersten Zwischenspeicher als auch in dem zweiten Zwischenspeicher innerhalb eines zweiten Zeitabschnitts speicherbar sind. Durch diese Maßnahme ist es möglich, sowohl ein Livebild für die Anzeigeeinrichtung immer zur Verfügung zu halten, da die aktuellen Videobilder in den ersten Zwischenspeicher jeder Kamera übertragen werden und außerdem sicherheitstechnisch relevante Bilder gespeichert werden können. Im Rahmen dieser Erfindung ist es möglich, daß der erste Zeitabschnitt und der zweite Zeitabschnitt zusammenfallen.

Insbesondere vorzugsweise speichert der zweite Zwischenspeicher eine vorgebbare Anzahl von Bilddaten und ist insbesondere ein FIFO-Speicher. Durch diese Maßnahme ist es möglich, die einer Bewegungserkennung vorangehenden Bilder und insbesondere eine vorgebbare Anzahl von Bildern endgültig zu speichern. Beispielsweise werden bei vier Videokameras vier FIFO-Speicher verwendet, die beispielsweise jeweils vier Videobilder zwischenspeichern. Wenn vorzugsweise die in den zweiten Zwischenspeicher gespeicherten Bilddaten in der Speichereinheit speicherbar sind, können diese den Videobildern zugeordnet werden, die nach einer Bewegungsmeldung aufgenommen wurden. Somit ist es möglich, sämtliche sicherheitstechnisch relevanten Bilder in der Speichereinheit zu speichern.

Vorzugsweise ist ein Abspeichern von aktuellen Bilddaten und/oder von in dem zweiten Zwischenspeicher gespeicherten Bilddaten erst nach Erfüllung eines Alarmkriteriums möglich. Auf diese Weise werden möglichst wenig Bilddaten gespeichert, so daß die interne Speicherkapazität effektiv genutzt wird.

Ein Alarmkriterium ist insbesondere dann erfüllt, wenn eine Bewegungserkennung vorliegt, wie oben schon dargestellt, und ferner, wenn ein externer Alarm, beispielsweise durch einen Mitarbeiter bei einer Bank, ausgelöst wird.

Vorzugsweise umfaßt die Speichereinheit wenigstens einen Ringspeicher und/oder einen linearen Speicher. Der Vorzug des Ringspeichers liegt darin begründet, daß nach einer gewissen Menge an Daten im Ringspeicher die ältesten Daten wieder gelöscht werden, so daß relativ wenig Speicherplatz nötig ist. Der Vorteil eines linearen Speichers liegt darin begründet, daß die Daten so lange gespeichert werden, bis diese von außen bzw. einer Bedienperson gelöscht werden. Der Ringspeicher umfaßt beispielsweise 100 Speichersegmente, von denen immer jeweils das älteste löschbar ist.

Insbesondere vorzugsweise werden die digitalen Bilder in der Bildeinheit zunächst komprimiert, und zwar beispielsweise in ein JPEG-Format, um so möglichst wenig Speicherplatz zu verwenden. Vor der Anzeige auf der Anzeigeeinrichtung werden die JPEG-Daten dann wieder dekomprimiert. Die Kompression kann entweder hardwaremäßig, beispielsweise mit Spezialchips, geschehen oder softwaremäßig. Ein bekannter Kompressionschip ist ein Chip des Unternehmens ZORAN mit der Nr.: ZR36060PQC.

Vorzugsweise werden wenigstens zwei Video-Front-Ends (Video-Verrechner) verwendet, so daß die Daten der verschiedenen Videokameras abwechselnd von den jeweiligen Video-Front-Ends bearbeitet werden können. Auf diese Art und Weise erhöht sich die Verarbeitungsgeschwindigkeit wesentlich.

Die Erfindung wird ferner durch ein Verfahren gemäß Anspruch 7 gelöst.

Wenn vorzugsweise außerdem der Verfahrensschritt des Anzeigens weiterer Speicherinhalte der Speichereinheit auf der Anzeigeeinrichtung vorgesehen ist, können im wesentlichen gleichzeitig sowohl aktuelle Bilddaten und archivierte Bilddaten angezeigt werden und als auch aktuelle Bilddaten gespeichert werden. Vorzugsweise werden bei Erfüllen eines Alarmkriteriums die Bilder unter Umgehung des zweiten Zwischenspeichers in die Speichereinheit gespeichert. Auf diese Weise sind die sicherheitstechnisch relevanten Bilder über einen längeren Zeitraum speicherbar.

Wenn vorzugsweise der Inhalt des zweiten Zwischenspeichers in der Speichereinheit gespeichert wird und den in der Speichereinheit gespeicherten Bilder zugeordnet wird, werden auch diejenigen Bilder einer dauerhaften Speicherung zugeführt, die einer Bewegungsmeldung vorangehen, so daß sämtliche sicherheitstechnisch relevanten Bilder gespeichert werden können.

Vorzugsweise ist das Alarmkriterium erfüllt, wenn die Differenz von Helligkeitswerten eines vorgebbaren Bereichs eines Bildes zu einem vorhergehenden Bild einen vorgebbaren ersten Wert überschreitet. Hierbei ist unter Helligkeitswert bzw. Differenz von Helligkeitswerten insbesondere auch die Differenz im Farbraum zweier zu vergleichender bzw. voneinander abzuziehender Bilder bzw. den entsprechenden Bereichen der Bilder gemeint. Vorzugsweise werden zwei aufeinanderfolgende Bilder je einer Videokamera voneinander abgezogen.

Vorzugsweise ist das Alarmkriterium beendet, wenn die Differenz der Helligkeitswerte einen vorgebbaren zweiten Wert unterschreitet und ferner vorzugsweise werden dann zusätzlich eine vorgebbare Anzahl Bilder in der Speichereinheit gespeichert. Durch diese vorzugsgemäßen Verfahrensschritte können auch die nach den sicherheitstechnisch relevanten Bilddaten vorliegenden Bilder gespeichert werden.

Vorzugsweise werden die zur Verfügung gestellten Videobilder zunächst komprimiert und vor der Anzeige auf der Anzeigevorrichtung dekomprimiert. Vorzugsweise werden gleichzeitig mehrere Bilder mehrerer Videokameras und/oder mehrere Bilder, die in der Speichereinheit gespeichert sind, angezeigt. Durch diesen bevorzugten Verfahrensschritt können mehrere Bereiche, die überwacht werden, gleichzeitig eingesehen werden.

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen bzgl. der Offenbarung aller im Text nicht näher erläuterten erfindungsgemäßen Einzelheiten ausdrücklich verwiesen wird. Es zeigt:

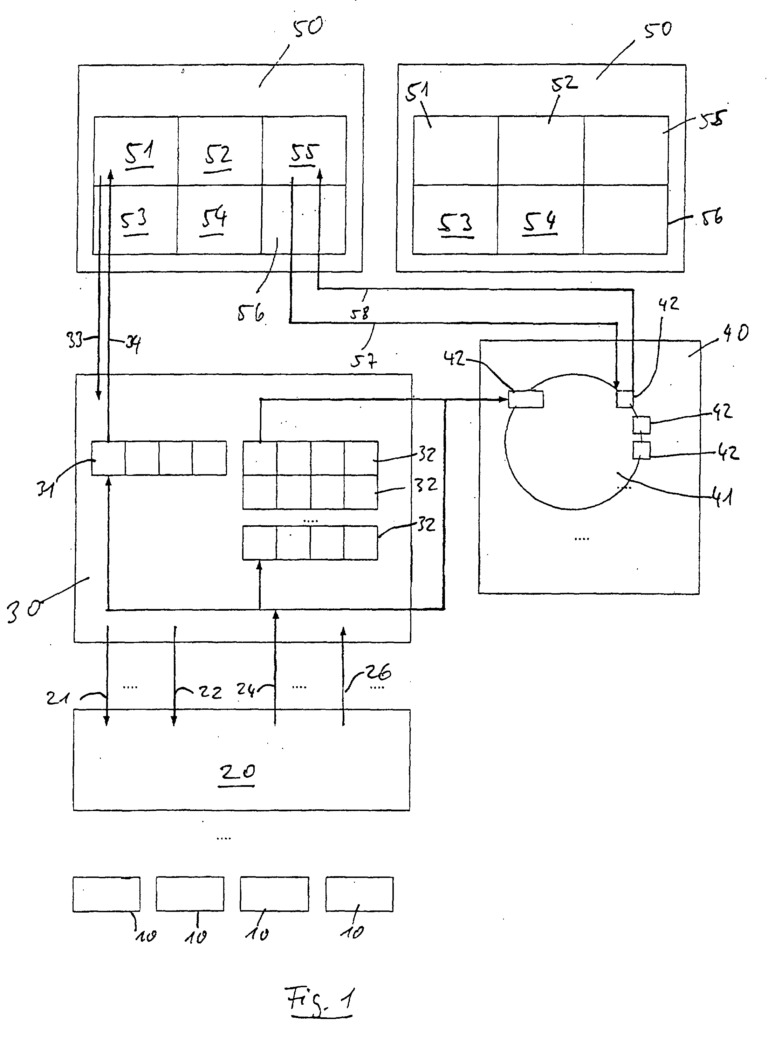

- Fig. 1: eine schematische Skizze des Videoüberwachungssystems.

In der folgenden Figur sind jeweils gleiche oder entsprechende Teile mit denselben Bezugszeichen bezeichnet, so daß auf eine erneute Vorstellung verzichtet wird.

Fig. 1 zeigt eine schematische Skizze eines erfindungsgemäßen Videoüberwachungssystems.

Zu erkennen sind vier Kameraeingänge 10, die mit einer Bildeinheit 20 in Verbindung stehen. In der Bildeinheit 20 werden die Videobilder beispielsweise in ein JPEG-Format komprimiert. Auf Anfrage nach Bild 1 (Bezugsziffer 21) oder nach Bild 4 (Bezugsziffer 22) wird eine Antwort an ein Bussystem weitergegeben. Beispielsweise kann die Antwort in Bilddaten zu einem Bild der Videokamera 1 aussehen. Die Bilddaten werden, wie schematisch dargestellt ist, in einen Livespeicher 31 der Zwischenspeichereinheit 30 gespeichert. Der Livespeicher 31 umfaßt vier Speichereinheiten für die vier Kameras. Die Zwischenspeichereinheit 30 umfaßt ferner mehrere FIFO-Speicher 32. Dargestellt sind drei FIFO-Speicher 32. Die Punkte zwischen den FIFO's 32 bedeutet, daß auch weitere FIFO's vorgesehen sein können. Entsprechend bedeuten Punkte in der Fig. 1, daß entsprechende Elemente auch mehrfach vorhanden sein können. Die von der Kamera 1 gelieferten Bilder werden beispielsweise in den zu der Kamera 1 zugeordneten FIFO 32 abgelegt. Dieses geschieht dann, wenn kein Bewegungsalarm bzw. keine Bewegung in den Kamerabildern detektiert wurde. Sofern eine Bewegung detektiert wurde, werden, wie in der Fig. 1 angedeutet, die entsprechenden Bilder der Kamera 1 direkt in der Speichereinheit 40 in den Speicherinhalt 42 abgespeichert. Zudem werden die dann in der FIF0 32 vorhandenen Bilder zu Kamera 1 auch in den Speicherinhalt 42 abgelegt. Die Speichereinheit 40 kann einen Ringspeicher 41 oder mehrere Ringspeicher umfassen und ferner auch einen oder mehrere lineare Speicher, die hier nicht dargestellt sind.

Ferner sind in Fig. 1 Benutzerschnittstellen 50 dargestellt. Die Benutzerschnittstellen 50 umfassen insbesondere eine Anzeigeeinrichtung, in der Livebilder der entsprechenden Kameras 51 bis 54 dargestellt werden können, und eine Anzeige der Wiedergabe gespeicherter Bilder 55 und 56. Ferner umfaßt die Benutzerschnittstelle 50 üblicherweise eine Maus und/oder eine Tastatur. Bevorzugterweise ist auf der Oberfläche eine Art Benutzerpanel dargestellt, mit dem eine Verwaltung und Bearbeitung von Videobildern möglich ist. Ein entsprechendes Panel, das hier nicht dargestellt ist, umfaßt auf der Anzeigeeinrichtung angezeigt sowohl eine Vielzahl von Optionen, wie Vorlauf, Rücklauf, Wiedergabe, Stop und Aufnahme, als auch die Zuordnung entsprechender Kameras zu entsprechenden Anzeigeeinrichtungssegmenten. Das entsprechende Panel kann beispielsweise vorzugsweise nach einer entsprechend vorgebbaren Zeit weggeblendet werden und bei Bedienen der Maus bzw. einer Taste auf der Tastatur wieder aufgeblendet werden. Bevorzugterweise ist die Anzeigeeinrichtung so ausgestaltet, daß das Beitriebssystem nicht, wie bei anderen Systemen üblich, angezeigt wird, wie beispielsweise durch einen Fensterrahmen.

Wie ferner in der Fig. 1 schematisch dargestellt ist, wird auf eine Anfrage eines Livebildes 33 eine Antwort Livebild 34 an die Benutzerschnittstelle 50 geleitet. Hierzu wird der Inhalt des Livespeichers zur Benutzerschnittstelle 50 übermittelt bzw. zwischendurch noch dekomprimiert. Die Benutzerschnittstelle 50 fragt kontinuierlich, je nach der Prozeßlastung, Bilder für jede Kamera an. Ist das sich in der Zwischenspeichereinheit 30 im Livespeicher 31 befindende Bild jünger als das zuletzt an die Benutzerschnittstelle 50 gegebene, so wird sofort das Bild aus dem Livespeicher 31 als schnelle Antwort an die Benutzerschnittstelle 50 geschickt. Das Livebild muß damit nicht erst noch bei der Bildeinheit 20 angefordert werden. Ist das Bild im Livespeicher 31 schon an die Benutzerschnittstelle 50 gesandt worden, so merkt sich die Zwischenspeichereinheit 30 die Anfrage, so daß beim nächsten Bild der Bildeinheit 20 die Anfrage dann schnell beantwortet werden kann.

Das Dekomprimieren geschieht bevorzugterweise in diesem Ausführungsbeispiel softwaremäßig. Das Komprimieren geschieht bevorzugterweise hardwaremäßig in der Bildeinheit 20 mit einem Spezialchip von ZORAN, dem ZR36060PQC. Da im allgemeinen in einem Zeitintervall mehr Bilder von der Hardware komprimiert werden als von der Software der Benutzerschnittstelle 50 dekomprimiert werden können, ist in den meisten Fällen schon ein neueres Bild im Livespeicher 31 vorrätig. Damit können die Bildanfragen der Benutzerschnittstelle 50 immer schnell beantwortet werden.

Das Videoüberwachungssystem kann eine beliebige Anzahl von Benutzerschnittstellen auch beispielsweise über Ethernet oder ISDN verwalten. Hierdurch ist eine parallele Livebilddarstellung und Übertragung möglich.

Bei der Initialisierung fragt die Zwischenspeichereinheit 30 bei der Bildeinheit 20 die Information ab, wieviele und welche Kameras an das System angeschlossen sind. Anschließend wird kontinuierlich von jeder Kamera ein Bild bei der Bildeinheit 20 angefragt. Sind beispielsweise die Kameras 1, 2 und 4 angeschlossen, so ergibt sich eine Bildreihenfolge 1, 2, 4, 1, 2, 4, 1, 2, 4, ... usw.. Sämtliche Bilder werden bevorzugterweise mit den gleichen Parametern, wie Auflösung, Kompressionsrate usw. angefordert, so daß die Hardware nicht unnötig diese Parameter umschalten muß. Durch die kontinuierliche Umschaltung und Anforderung ist eine optimale Bewegungserkennung durch die Bildeinheit 20 gewährleistet, da diese nur Unterschiede zwischen zwei aufeinanderfolgenden Bildern erkennt. Die Zeiten zwischen den aufeinanderfolgenden Schaltungen auf ein und dieselbe Kamera werden so für alle Kameras minimiert.

Solange keine Bewegung gemeldet wurde, wird das von der Bildeinheit 20 angeforderte Bild in einen First-In-First-Out-Speicher (FIF0-Speicher) 32 geschrieben. Die Größe des FIFO-Speichers 32 ist einstellbar. Standardmäßig reichen hier zwei Bilder. Sind im FIFO mehr als zwei Bilder, so werden die ältesten Bilder gelöscht. Für jede Kamera ist ein FIFO-Speicher 32 vorgesehen.

Wird auf einer Kamera eine Bewegung erkannt, so wird ein Bewegungsalarm 26 an die Zwischenspeichereinheit 30 gegeben. In diesem Fall wird der zu dieser Kamera gehörende FIFO-Speicher 32 in einen Speicherinhalt 42 eines Ringspeichers 41 der Speichereinheit 40 zur dauerhaften Speicherung übergeben. Die Anzahl der Bilder, die ab der Beendigung der Bewegung noch zu speichern sind, wird auf einen festen Wert MD-Zähler gesetzt. Hier reichen im allgemeinen drei Bilder aus. Solange diese drei Bilder noch nicht angefordert und gespeichert wurden, bleibt der FIFO-Speicher 32 der entsprechenden Kamera leer.

Außerdem werden nach dem Bewegungsalarm 26 kontinuierlich Bilder von dieser Kamera angefordert, wobei jedes Bild von dieser Kamera in der Speichereinheit 40 dauerhaft abgespeichert wird. Die entsprechenden Bilder dieser Kamera und die zwischengespeicherten Bilder im FIFO-Speicher 32 werden einander zugeordnet. Es wird bei jedem abgespeicherten Bild von der entsprechenden Kamera der MD-Zähler um eins reduziert. Solange der MD-Zähler größer als Null ist, werden die Bilder direkt in der Speichereinheit 40 gespeichert. Sobald der MD-Zähler gleich Null ist, werden die Bilder bis zur nächsten Bewegungserkennung wieder im FIFO-Speicher 32 zwischengespeichert.

Damit ist eine vollständige Dokumentation des Vorgangs, der zur Bewegungserkennung führte, möglich. Würde man mit der dauerhaften Speicherung der Bilder einer Kamera erst nach Bewegungsalarm beginnen, so wäre das zu spät und die Bilder, die zur Bewegungserkennung führten, wären verloren. Mit dem erfindungsgemäßen Videoüberwachungssystem ist es möglich, die Bilder jeder Kamera, die zur Bewegungserkennung führen, durch Zwischenspeicherung im FIFO-Speicher 32 zu sichern und im Nachhinein dann dauerhaft abzuspeichern. Die kontinuierliche Anforderung von Bildern ermöglicht eine schnelle und sichere Bewegungserkennung.

Es können nun in der Speichereinheit 40 gespeicherte Bilddaten in der Benutzerschnittstelle 50 angezeigt werden, und zwar insbesondere vorzugsweise parallel zur Anzeige der Livebilder 51 bis 54. In Fig. 1 sind beispielsweise zwei Bereiche zur Anzeige der Wiedergabe gespeicherter Bilder 55 und 56 dargestellt. Diesem Vorausgehend ist eine Anfrage zur Wiedergabe gespeicherter Bilder 57 und die entsprechende Antwort der Wiedergabe gespeicherter Bilder 58.

Die Anzeige der Bilder erfolgt durch softwaremäßige Dekompression unter Darstellung des unkomprimierten Bildes. Die Software-Dekompression geschieht beispielsweise durch den Hauptprozessor eines Computers. Da die Rechenleistung des Hauptprozessors für alle Anwendungen zur Verfügung stehen muß, darf der Hauptprozessor nicht allein nur mit der Software-Dekompression der Bilder beschäftigt sein.

Hierzu erkennt die Benutzerschnittstelle 50, wann der Hauptprozessor ohne Beschäftigung ist. In diesen Ruhezeiten wird von jeder Kamera genau ein Bild angefordert, soweit nicht schon geschehen. Es wird immer nur ein Bild angefordert. Erst wenn dieses Bild von der Speichereinheit 40 oder von der Zwischenspeichereinheit 30 beantwortet und dekomprimiert und angezeigt wurde, kann in der nächsten Ruhezeit ein neues Bild angefordert werden. Dieses Prinzip wird sowohl für die Livebilddarstellung als auch für die Wiedergabe von gespeicherten Bildern angewendet.

Der Bewegungsalarm 26 kann durch eine Bewegungserkennung durch Erzeugen von Differenzbildern erfolgen oder aber durch externes Betätigen beispielsweise eines Schalters durch einen Bankangestellten. Wenn beispielsweise ein Alarm von außen beispielsweise durch einen Bankangestellten gegeben wird, kann der Ringspeicher 42 in einen linearen Speicher umgewandelt werden, so daß der Speicherinhalt 42 nicht von allein gelöscht wird.

Mit dem beschriebenen Videoüberwachungssystem, das insbesondere ein Multiplex-System ist, ist eine parallele Ausführung der folgenden Funktionen mit einem Gerät möglich: Bewegungserkennung, Bildspeicherung, lokale Livebilddarstellung, Livebildübertragung auf eine andere externe Benutzerschnittstelle und lokale Bildwiedergabe und Bildübertragung bei Wiedergabe auf eine externe Benutzerschnittstelle.

Die Dekompression kann insbesondere auch hardwaremäßig geschehen. Ferner ist es möglich, die Bearbeitung der Daten im Hauptprozessor nach Wertigkeit dieser Daten durchzuführen. So können beispielsweise bei Auslösen eines Alarms die diesem Alarm zugrundeliegenden Bilder einer Kamera bevorzugt bearbeitet werden.

### Bezugszeichenliste

- 10: Kameraeingang
- 20: Bildeinheit
- 21: Anfrage nach Bild 1
- 22: Anfrage nach Bild 4
- 24: Antwort Bild 1
- 26: Bewegungsalarm
- 30: Zwischenspeichereinheit
- 31: Livespeicher
- 32: FIFO-Speicher
- 33: Anfrage Livebild
- 34: Antwort Livebild
- 40: Speichereinheit
- 41: Ringspeicher
- 42: Speicherinhalt
- 50: Benutzerschnittstelle
- 51: Livebild Kamera 1
- 52: Livebild Kamera 2
- 53: Livebild Kamera 3
- 54: Livebild Kamera 4
- 55: Anzeige Wiedergabe gespeicherter Bilder
- 56: Anzeige Wiedergabe gespeicherter Bilder
- 57: Anfrage Wiedergabe gespeicherter Bilder
- 58: Antwort Wiedergabe gespeicherter Bilder

## Patentansprüche

1. Videoüberwachungssystem mit wenigstens einer Videokamera, die eine Folge von Bilddaten liefert, wobei eine Bildeinheit (20) vorgesehen ist, in der die Bilddaten bearbeitbar sind, wobei ferner eine Speichereinheit (40), in der die Bilddaten speicherbar sind, vorgesehen ist und wobei eine Anzeigeeinrichtung (51 bis 56) zur Anzeige von Bilddaten vorgesehen ist, wobei in einem ersten Zeitabschnitt sowohl aktuelle Bilddaten und gespeicherte Bilddaten auf der Anzeigeeinrichtung (51 bis 56) darstellbar sind als auch aktuelle Bilddaten in der Speichereinheit (40) speicherbar sind, **dadurch gekennzeichnet, dass** in der Bildeinheit (20) Differenzbilder von je zwei aufeinander folgenden Bildern der Folge von Bilddaten je einer Videokamera oder von einem Bild der Folge von Videobildern zu einem Referenzbild erzeugbar sind, wobei bei Überschreiten eines vorgebbaren ersten Wertes der Differenz von

2. Videoüberwachungssystem nach Anspruch 1, **dadurch gekennzeichnet, daß** eine Zwischenspeichereinheit (30) vorgesehen ist, die für jede Videokamera einen ersten Zwischenspeicher (31) und einen zweiten Zwischenspeicher (32) umfaßt, wobei die Bilddaten eines Bildes sowohl in dem ersten Zwischenspeicher (31) als auch in dem zweiten Zwischenspeicher (32) innerhalb eines zweiten Zeitabschnitts speicherbar sind.

3. Videoüberwachungssystem nach Anspruch 2, **dadurch gekennzeichnet, daß** der zweite Zwischenspeicher (32) eine vorgebbare Anzahl von Bilddaten speichert und insbesondere ein FIFO-Speicher ist.

4. Videoüberwachungssystem nach Anspruch 3, **dadurch gekennzeichnet, daß** die in dem zweiten Zwischenspeicher (32) gespeicherten Bilddaten in der Speichereinheit (40) speicherbar sind.

5. Videoüberwachungssystem nach einem oder mehreren der Ansprüche 1 bis 4, **dadurch gekennzeichnet, daß** ein Abspeichern von aktuellen Bilddaten und/oder von in dem zweiten Zwischenspeicher (32) gespeicherten Bilddaten erst nach Erfüllung eines Alarmkriteriums möglich ist.

6. Videoüberwachungssystem nach einem oder mehreren der Ansprüche 1 bis 5, **dadurch gekennzeichnet, daß** die Speichereinheit (40) wenigstens einen Ringspeicher (41) und/oder einen linearen Speicher umfaßt. Helligkeitswerten oder der Differenz im Farbraum eines vorgebbaren Bereichs des Bildes ein Alarmkriterium erfüflt ist und wobei eine Anzahl von Bildern, die vor Erfüllung des Alarmkriteriums aufgenommen wurden und eine vorgebbare Anzahl von aktuellen Bildern in der Speichereinheit (40) speicherbar sind.

7. Verfahren zur Bearbeitung, Verwaltung und/oder Speicherung von Folgen von Videobildern wenigstens einer Videokamera mit den folgenden Verfahrensschritten:
a) Zur Verfügung stellen von wenigstens einem Videobild der wenigstens einen Videokamera,
b) Speichern des Bildes in einem ersten Zwischenspeicher (31) und einem zweiten Zwischenspeicher (32) und/oder in einer Speichereinheit (40),
c) Anzeige des Inhalts des ersten Zwischenspeichers (31) auf einer Anzeigeeinrichtung (51 bis 56), wobei
d) bei Erfüllen eines Alarmkriteriums eine Anzahl von Bildern, die vor Erfüllung des Alarmkriteriums aufgenommen wurden und eine vorgebbare Anzahl von aktuellen Bildern in der Speichereinheit (40) gespeichert werden, wobei Differenzbilder von je zwei aufeinander folgenden Bildern der Folge von Bilddaten je einer Videokamera oder von einen Bild der Folge von Videobilddaten zu einem Referenzbild erzeugt werden und das Alarmkriterium erfüllt ist, wenn die Differenz von Helligkeitswerten oder die Differenz im Farbraum eines vorgebbaren Bereichs des Bildes zu einem vorhergehenden Bild einen vorgebbaren ersten Wert überschreitet.

8. Verfahren nach Anspruch 7, **dadurch gekennzeichnet, daß** außerdem der Verfahrensschritt des Anzeigens weiterer Speicherinhalte der Speichereinheit (40) auf der Anzeigeeinrichtung (51 bis 56) vorgesehen ist.

9. Verfahren nach Anspruch 7 und/oder 8, **dadurch gekennzeichnet, daß** bei Erfüllen eines Alarmkriteriums die Bilder unter Umgehung des zweiten Zwischenspeichers (32) in die Speichereinheit (40) gespeichert werden.

10. Verfahren nach Anspruch 9, **dadurch gekennzeichnet, daß** der Inhalt des zweiten Zwischenspeichers (32) in der Speichereinheit (40) gespeichert wird und den in der Speichereinheit (40) gespeicherten Bildern zugeordnet wird.

11. Verfahren nach Anspruch 9 und/oder 10, **dadurch gekennzeichnet, daß** das Alarmkriterium erfüllt ist, wenn die Differenz von Helligkeitswerten eines vorgebbaren Bereichs des Bildes zu einem vorhergehenden Bild einen vorgebbaren ersten Wert überschreitet.

12. Verfahren nach Anspruch 11, **dadurch gekennzeichnet, daß** zwei aufeinanderfolgende Bilder je einer Videokamera voneinander abgezogen werden.

13. Verfahren nach einem oder beiden der Ansprüche 11 und 12, **dadurch gekennzeichnet, daß** das Alarmkriterium beendet ist, wenn die Differenz der Helligkeitswerte einen vorgebbaren zweiten Wert unterschreitet und daß dann zusätzlich eine vorgebbare Anzahl Bilder in der Speichereinheit (40) gespeichert werden.

14. Verfahren nach einem oder mehreren der Ansprüche 7 bis 13, **dadurch gekennzeichnet, daß** die zur Verfügung gestellten Videobilder zunächst komprimiert werden und vor der Anzeige auf der Anzeigevorrichtung (51 bis 56) dekomprimiert werden.

15. Verfahren nach einem oder mehreren der Ansprüche 7 bis 14, **dadurch gekennzeichnet, daß** gleichzeitig mehrere Bilder mehrerer Videokameras und/oder mehrere Bilder, die in der Speichereinheit (40) gespeichert sind, angezeigt werden.

## Claims

1. Video surveillance system with at least one video camera that supplies a sequence of image data, whereby there is provided an image unit (20) in which the image data can be processed, whereby there is also provided a storage (memory) unit (40) in which the image data can be stored, and whereby there is provided a display device (51 to 56) to display image data, whereby in a first time period both current image data and stored image data can be presented on the display device (51 to 56) and also current image data can be stored in the memory unit (40), **characterized in that** difference images each from two consecutive images of the sequence of image data from one video camera each or from one image of the sequence of video images can be generated in the image unit (20) to form a reference image, whereby an alarm criterion is satisfied when a predefinable first value of the difference of brightness values or the difference in the colour space of a predefinable region of the image is exceeded, and whereby a plurality of images that were recorded before the alarm criterion was satisfied and a predefinable number of current images can be stored in the memory unit (40).

2. Video surveillance system according to Claim 1, **characterized in that** there is provided an intermediate storage unit (30) comprising for each video camera a first intermediate memory (31) and a second intermediate memory (32), whereby the image data of an image can be stored both in the first intermediate memory (31) and also in the second intermediate memory (32) within a second period of time.

3. Video surveillance system according to Claim 2, **characterized in that** the second intermediate memory (32) stores a predefinable number of image data and in particular is a FIFO memory.

4. Video surveillance system according to Claim 3, **characterized in that** the image data stored in the second intermediate memory (32) can be stored in the memory unit (40).

5. Video surveillance system according to one or more of the Claims 1 to 4, **characterized in that** the storage of current image data and/or of image data stored in the second intermediate memory (32) is possible only after an alarm criterion has been satisfied.

6. Video surveillance system according to one or more of the Claims 1 to 5, **characterized in that** the memory (storage) unit (40) comprises at least one ring memory (circular buffer) (41) and/or one linear memory.

7. Method for processing, managing and/or storing sequences of video images from at least one video camera with the following process steps:
a) The provision of at least one video image from at least one video camera,
b) The storage of the image in a first intermediate memory (31) and in a second intermediate memory (32) and/or in a storage unit (40),
c) The display of the contents of the first intermediate memory (31) on a display device (51 to 56), whereby
d) in the event that an alarm criterion is satisfied, a plurality of images recorded before the alarm criterion was satisfied and a predefinable number of current images are stored in the memory unit (40), whereby difference images each from two consecutive images of the sequence of image data from one video camera each or from one image of the sequence of video images can be generated to form a reference image and the alarm criterion is satisfied if the difference of brightness values or the difference in the colour space of a predefinable region of the image relative to a foregoing image exceeds a predefinable first value.

8. Method according to Claim 7, **characterized in that** the process step of displaying further storage contents of the memory unit (40) on the display device (51 to 56) is provided in addition.

9. Method according to Claim 7 and/or 8, **characterized in that**, in the event that an alarm criterion is satisfied, the images are stored in the memory unit (40), bypassing the second intermediate memory (32).

10. Method according to Claim 9, **characterized in that** the content of the second intermediate memory (32) is stored in the memory unit (40) and is assigned to the images stored in the memory unit (40).

11. Method according to Claim 9 and/or 10, **characterized in that** the alarm criterion is satisfied if the difference of brightness values of a predefinable region of the image relative to a foregoing image exceeds a predefinable first value.

12. Method according to Claim 11, **characterized in that** two successive images each from one video camera are subtracted from one another.

13. Method according to one or both of the Claims 11 and 12, **characterized in that** the alarm criterion is terminated if the difference of the brightness values exceeds a predefinable second value and that in addition a predefinable number of images is then stored in the memory unit (40).

14. Method according to one or more of the Claims 7 to 13, **characterized in that** the video images that are made available are first of all compressed and are decompressed before being displayed on the display device (51 to 56).

15. Method according to one or more of the Claims 7 to 14, **characterized in that** several images from several video cameras and/or several images that are stored in the memory unit (40) are displayed simultaneously.

## Revendications

1. Système de vidéosurveillance comportant au moins une caméra vidéo, qui fournit une séquence de données d'image, une unité d'image (20) étant prévue, dans laquelle les données d'image peuvent être traitées, une unité de stockage (40), dans laquelle les données d'image peuvent être stockées, étant prévue, et un dispositif d'affichage (51 à 56) pour l'affichage de données d'image étant prévu, et où, dans une première période, aussi bien des données d'image actuelles et des données d'image stockées pouvant être présentées sur le dispositif d'affichage (51 à 56) et des données d'image actuelles pouvant être mémorisées dans l'unité de stockage (40), **caractérisé en ce que** des images différentielles de respectivement deux images successives de la séquence de données d'image d'une caméra vidéo ou d'une image de la séquence d'images vidéo peuvent être générées dans l'unité d'image (20) pour former une image de référence, un critère d'alarme étant satisfait en cas de dépassement d'une première valeur prédéfinissable de la différence définissable de valeurs de luminosité ou de la différence dans l'espace couleur d'une plage prédéfinissable de l'image et un nombre d'images qui ont été faites avant le critère d'alarme, et un nombre prédéfinissable d'images actuelles pouvant être stocké dans l'unité de mémoire (40).

2. Système de vidéosurveillance selon la revendication 1, **caractérisé en ce qu'**il est prévu une unité de stockage intermédiaire (30), qui comprend pour chaque caméra vidéo une première mémoire intermédiaire (31) et une seconde mémoire intermédiaire (32), les données d'image d'une image pouvant être générées aussi bien dans la première mémoire intermédiaire (31) que dans la seconde mémoire intermédiaire (32) dans les limites d'une seconde période.

3. Système de vidéosurveillance selon la revendication 2, **caractérisé en ce que** la seconde mémoire intermédiaire (32) stocke un nombre prédéfinissable de données d'image et est en particulier une mémoire premier entré-premier sorti (FIFO).

4. Système de vidéosurveillance selon la revendication 3, **caractérisé en ce que** les données d'image stockées dans la seconde mémoire intermédiaire (32) peuvent être stockées dans l'unité de stockage (40).

5. Système de vidéosurveillance selon l'une ou plusieurs des revendications 1 à 4, **caractérisé en ce qu'**une mémorisation de données d'image actuelles et/ou de données d'image stockées dans la seconde mémoire intermédiaire (32) n'est possible qu'après la satisfaction d'un critère d'alarme.

6. Système de vidéosurveillance selon l'une ou plusieurs des revendications 1 à 5, **caractérisé en ce que** l'unité de stockage (40) comprend au moins une mémoire en anneau (41) et/ou une mémoire linéaire.

7. Procédé pour le traitement, la gestion et/ou le stockage de séquence d'images vidéo d'au moins une caméra vidéo présentant les étapes de procédé suivantes:
a) mise à disposition d'au moins une image vidéo d'au moins une caméra vidéo,
b) stockage de l'image dans une première mémoire intermédiaire (31) et une seconde mémoire intermédiaire (32) et/ou dans une unité de stockage (40),
c) affichage du contenu de la première mémoire intermédiaire (31) sur un dispositif d'affichage (51 à 56), moyennant quoi
d) en cas de satisfaction d'un critère d'alarme, un nombre d'images, qui ont été enregistrées avant la satisfaction du critère d'alarme, et un nombre prédéfinissable d'images actuelles est stocké dans l'unité de stockage (40), des images différentielles de respectivement deux images successives de la séquence de données d'image d'une caméra vidéo ou d'une image de la séquence de données d'image vidéo étant générées pour former une image de référence et le critère d'alarme étant satisfait lorsque la différence des valeurs de luminosité ou la différence dans l'espace couleur d'une zone prédéfinissable de l'image par rapport à une image antérieure dépasse une première valeur prédéfinissable.

8. Procédé selon la revendication 7, **caractérisé en ce que**, d'autre part, l'étape de procédé de l'affichage d'autres contenus de mémoire de l'unité de stockage (40) est prévue sur le dispositif d'affichage (51 à 56).

9. Procédé selon la revendication 7 et/ou 8, **caractérisé en ce que**, en cas de satisfaction d'un critère d'alarme, les images sont mémorisées dans l'unité de mémoire (40) en contournant la seconde mémoire intermédiaire (32).

10. Procédé selon la revendication 9, **caractérisé en ce que** le contenu de la seconde mémoire intermédiaire (32) est mémorisé dans l'unité de mémoire (40) et est attribué aux images stockées dans l'unité de stockage (40).

11. Procédé selon la revendication 9 et/ou 10, **caractérisé en ce que** le critère d'alarme est satisfait lorsque la différence des valeurs de luminosité d'une zone prédéfinissable de l'image, par rapport à une image antérieure, dépasse une première valeur prédéfinissable.

12. Procédé selon la revendication 11, **caractérisé en ce que** deux images consécutives d'une caméra vidéo sont soustraites l'une de l'autre.

13. Procédé selon l'une ou les deux revendications 11 et 12, **caractérisé en ce que** le critère d'alarme est terminé lorsque la différence des valeurs de luminosité est inférieure à une seconde valeur prédéfinissable et **en ce qu'**ensuite, en outre, un nombre prédéfinissable d'images est stocké dans l'unité de stockage (40).

14. Procédé selon l'une ou plusieurs des revendications 7 à 13, **caractérisé en ce que** les images vidéo mises à disposition sont d'abord comprimées et sont décomprimées avant l'affichage sur le dispositif d'affichage (51 à 56).

15. Procédé selon l'une quelconque ou plusieurs des revendications 7 à 14, **caractérisé en ce que** simultanément plusieurs images de plusieurs caméras vidéo et/ou plusieurs images, qui sont stockées dans l'unité de stockage (40), sont affichées.
